# EUROPEAN PATENT APPLICATION

(11) **EP 4 722 010 A1**
(43) Date of publication of application: **08.04.2026**
(21) Application number: 25206581.8
(22) Date of filing: 03.10.2025
(51) Int. Cl.: B60J 1/18, B60J 7/12, B60J 7/16

(54) **TARGA STYLE CAR PROVIDED WITH A MOVABLE REAR WINDOW**

(30) Priority: 03.10.2024 IT 202400021963
(71) Applicant: FERRARI S.p.A., 41100 Modena (IT)
(72) Inventor: CALTAGIRONE, Alessandro, 41100 Modena (IT)
(74) Representative: Studio Torta S.p.A.

(57) **Abstract**

A targa style car (1) has a passenger compartment (4), which is rearwardly delimited by a rear window (20), which is at least partly transparent, and has an openable roof (11); the roof (11), when opened, is stored in a compartment (16), which is arranged behind the passenger compartment (4) and is closed by a movable cover (18); the rear window (20) forms part of such cover (18) and includes a wall (28), defining an aperture (29), and a panel (30), which is movable relative to the wall (28) to open and close this aperture (29).

## Description

### CROSS-REFERENCE TO RELATED APPLICATIONS

This patent application claims priority from Italian patent application no. 102024000021963, filed on October 3, 2024, the entire disclosure of which is incorporated herein by reference.

### BACKGROUND

The present invention relates to a targa style car, on which the rear window forms part of a movable cover for a compartment that is provided at the rear and houses a roof of said car when said roof is opened.

### PRIOR ART

As is known, the passenger compartment of targa style cars is provided with an openable roof and an upper cross member arranged behind said roof, at two uprights that define the rear edge of the side doorways. Such cross member essentially performs the function of a roll bar.

In general, the roof can be defined by a rigid element, for example of the folding type, or by a folding top.

The roof, when opened, is stored in a rear compartment by controlling a motorised movement mechanism, and, in normal travelling conditions, such rear compartment is closed by a cover, normally referred to with the English term "tonneau cover". In turn, this cover is movable to open the compartment underneath during the roof moving operations.

This configuration is adopted for sports cars, especially (but not exclusively) for two-seater cars.

In certain cases, the car has a rear window in transparent material extending downwards starting from the cross member mentioned here above, rearwardly delimiting the upper part of the passenger compartment and forming part of the "tonneau cover". Therefore, in these cases, the rear window is movable together with the other parts of the "tonneau cover", in order to be able to open and close the compartment underneath, provided for housing the roof.

In this type of solution, when the roof has been opened, the passenger compartment is subjected to an airflow, which enters just through the upper opening left free by the roof. Such airflow is particularly intense at high speeds: in these cases, the air is subject to vortexes in the passenger compartment and, therefore, tends to produce noise and to cause discomfort for the people occupying said passenger compartment.

This drawback is particularly felt in cars where the rear window has a shape that slopes downwards gradually, going longitudinally backwards, so it delimits a closed rear space that, in practice, forms part of the passenger compartment. In particular, the above mentioned turbulence is particularly intense jsut at this closed rear space below the rear window, and becomes particularly troublesome when there is the intention of designing cars where such space is dedicated at least partly to seating spaces for rear passengers.

Once again as a result of the air entering into this closed space when the roof has been opened, the car encounters aerodynamic resistance to forward travel that is relatively high and causes, as a consequence, a considerable increase in consumption of fuel/energy compared to the condition in which the roof is closed.

There is, therefore, the need to solve these drawbacks, essentially aerodynamic in nature, on targa style cars.

### DESCRIPTION OF THE INVENTION

The aim of the present invention is to provide a targa style car, having a movable rear window, which allows the need mentioned above to be met in a simple and economical way.

According to the present invention, a targa style car is provided, having a movable rear window, as defined in claim 1.

The dependent claims describe preferred embodiments of the present invention and form an integral part of the present description.

### BRIEF DESCRIPTION OF THE DRAWINGS

The present invention will now be described with reference to the appended drawings, which illustrate several non-limiting embodiments thereof, wherein:
- Figure 1 is a prospective upper view and partially shows a preferred embodiment of the targa style car, provided with a movable rear window, according to the teachings of the present invention;
- Figure 2 is similar to Figure 1 and schematically shows the opening of the rear window and the movement of an openable roof of the car; and
- Figures 3 and 4 are also similar to Figure 1, and show two possible options for moving a rear window panel, according to preferred embodiments of the present invention.

### PREFERRED EMBODIMENTS OF THE INVENTION

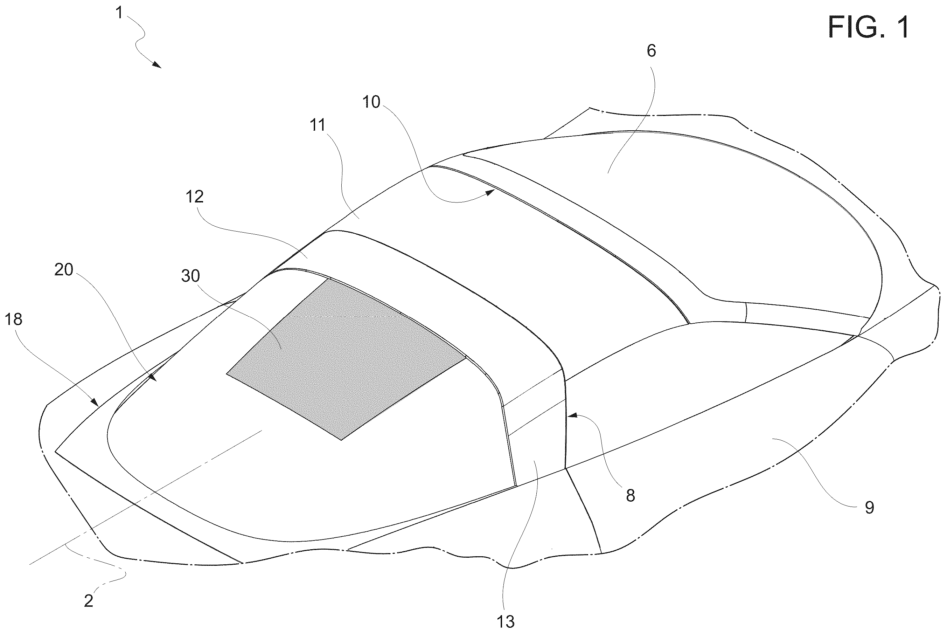

In Figure 1, the reference number 1 indicates, as a whole, a car, for example a sports car (partially shown), which extends along a longitudinal axis 2 corresponding with the travel direction.

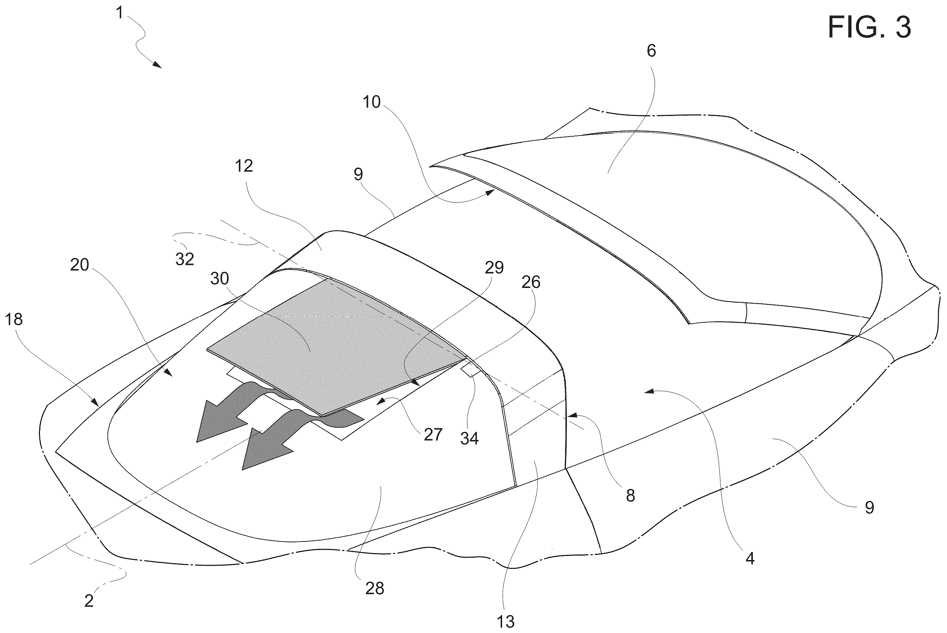

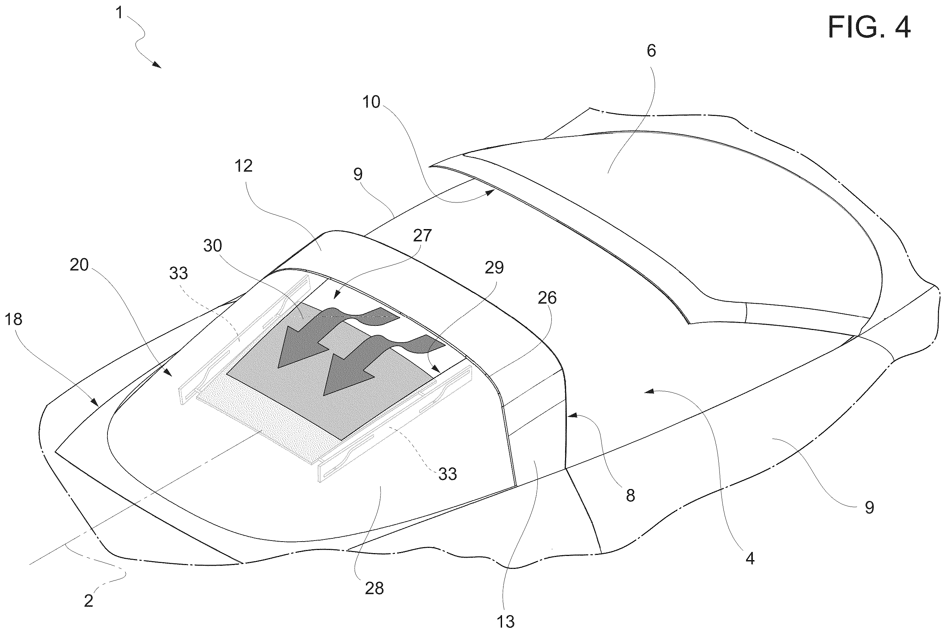

With reference to Figures 3 and 4, the car 1 has a passenger compartment 4 (partially shown), delimited longitudinally at the front by a windscreen 6 and housing two seats (not shown), which are accessible by a driver and respectively by a passenger through two doorways 8 opposite to each other, closed by respective side doors 9. The aforementioned seats are front seats; a rear seat (not shown) arranged behind the front ones could also possibly be envisaged.

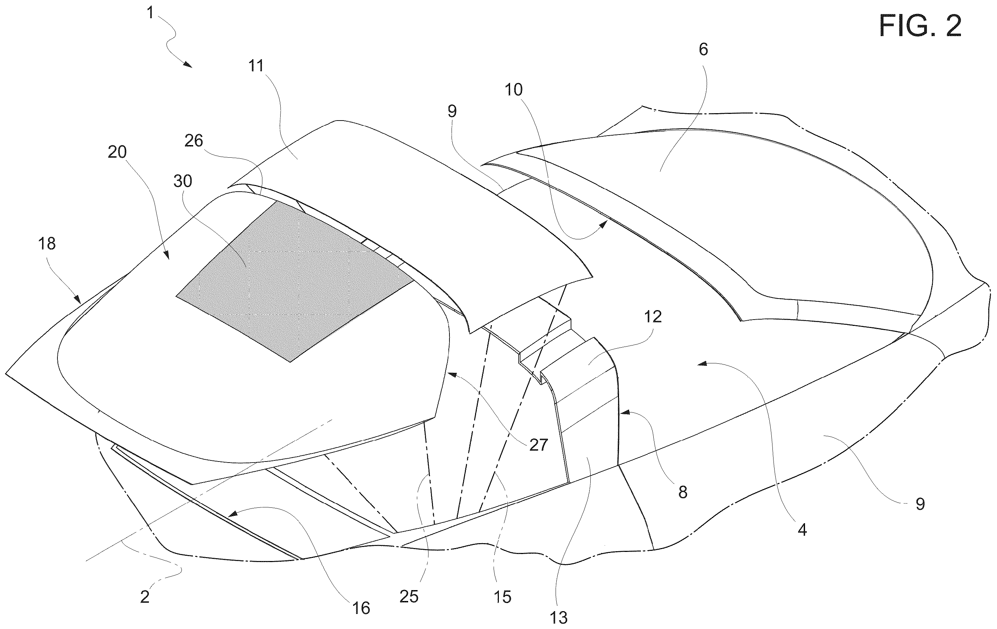

The passenger compartment 4 has an upper opening 10 closed by an openable roof 11, shown in Figures 1 and 2: the rear edge of the upper opening 10 is defined by a cross member 12, which is arranged at two side uprights 13 that define the rear edge respectively of the doorways 8 and performs, advantageously, the function of a roll bar.

The roof 11 can be of the rigid type, possibly folding into several parts, or the soft type, i.e. be defined by a folding top. The opening and closing movements of the roof 11 are achieved by a motorised movement mechanism 15, which is schematically shown by means of two dashed and dotted lines, and is not described in detail, as it can be one of the mechanisms of known type.

With reference to Figure 2, when opened, the roof 11 is stored in a compartment 16, shown in a simplified manner, arranged behind the passenger compartment 4 and having an upper access closed by a cover 18, usually indicated with the term "tonneau cover" in English. In turn, the cover 18 is movable so as to keep the compartment 16 open during the movement operations of the roof 11, and to keep it closed in the other travel conditions.

The car 1 comprises a rear window 20 defined at least partly by transparent material, to allow the driver to see through said rear window 20 while driving.

As shown in Figures 1, 3 and 4, the rear window 20 is connected to the cross member 12, and faces the windscreen 6 along the axis 2, so it longitudinally delimits an upper zone of the passenger compartment 4. According to one aspect of the present invention, the rear window 20 forms part of the cover 18. With respect to the just described position, which corresponds to closing the compartment 16, Figure 2 schematically shows that the rear window 20 is movable together with the other parts of the cover 18 so as to be brought into a raised open position and, therefore, to allow the movement operations for storing the roof 11 into the compartment 16 and for removing the same roof 11 from the compartment 16, by means of the mechanism 15.

Movement of the cover 18, with the rear window 20, between the closed position and the open position, is obtained by means of a motorised movement mechanism 25, which is schematically shown with a dashed line and is not described in detail, as it can be one of the mechanisms of known type. Activation of the mechanism 25 is synchronised with activation of the mechanism 15, according to known control logics, in response to a command from the driver.

Considering the closed position shown in Figures 3 and 4, the cover 18 has a front end edge 26, which is fluid-tightly coupled to the cross member 12, and an upper zone of the side uprights 13. Preferably, the front end edge 26, together with a front portion of the rear window 20, has a shape that has a downwardly facing concave curve (and therefore an outwardly facing convex curve) so as to follow the fillet between the cross member 12 and the upper zone of the side uprights 13. More preferably, going longitudinally backwards starting from the front end edge 26, the profile of the rear window 20 slopes downwards gradually. In this manner, the rear window 20 downwardly delimits a cavity 27 (indicated in Figure 2, even if not properly visible) which, in the closed above described position, forms part of the passenger compartment 4, or, in any case, communicates directly with the passenger compartment 4 seamlessly.

With reference to Figures 3 and 4, according to the invention the rear window 20 comprises a main wall 28, defining the perimeter edge of an aperture 29, and a secondary panel 30, which is movable relative to the wall 28, so as to close the aperture 29 fluid-tightly, and to open said aperture 29 at least partially. Opening of the aperture 29 allows outflow of the air from the cavity 27 towards the outside during forward travel of the car 1 when the roof 11 is stored and closed in the compartment 16 and the upper opening 10 is therefore open.

In particular, the wall 28 and the panel 30 have respective transparent surfaces, which are substantially arranged as a prolongation of each other along the edge of the aperture 29, when the latter is closed by the panel 30. The adverb "substantially" has been used here as it is necessary to consider the presence of gaskets (not shown) to guarantee fluid-tightness along the edge of the aperture 29, and such gaskets could produce a discontinuity between the transparent surfaces of the wall 28 and the panel 30. According to a preferred embodiment, these gaskets are also made of a transparent material, to make up for this discontinuity, at least partly.

The coupling and the movement of the panel 30 relative to the wall 28 can be of various type: in the embodiment of Figure 3, it is defined by at least one hinge 32 (indicated schematically with a dashed and dotted line) so as to allow a rotation of the panel 30; in the embodiment of Figure 4, the coupling includes a guide mechanism 33 (schematically shown with a thin line), which is carried by the wall 28, and along which the panel 30 can slide. Preferably, the guide mechanism 33 can be integrated directly into the thickness of the transparent material of the wall 28 and/or can also be formed of transparent components, in order not to alter the visibility through the rear window 20.

Figure 4 shows that the panel 30 is arranged inside the cavity 27 (i.e., underneath the wall 28) in order to open the aperture 29; according to an embodiment, not shown, the panel 30 can also slide outwards. In any case, as mentioned above, the mechanism that couples the panel 30 to the wall 28 can be different to what is shown: in particular, it could be formed of a combination of at least one guide and at least one hinge, or could comprise a lever mechanism, for example an articulated quadrilateral one.

As mentioned above, the aperture 29 has dimensions, position and shape such as to allow, during use, an outflow of air towards the outside when the roof 11 is stored and closed in the compartment 16 and therefore the upper opening 10 is open (at least in operating conditions in which the car 1 reaches a minimum predefined speed). The breadth, shape and position of the aperture 29 are established in design exclusively for aerodynamic purposes, i.e. in order to obtain an optimal outflow of air towards the outside, and not in order to allow objects (for example, luggage) to be passed through the aperture 29 and/or in order to allow an access from the outside to the cavity 27 underneath the rear window 20.

In particular, in the appended drawings, the aperture 29 is made in proximity to the front end edge 26 and, therefore, in proximity to the cross member 12. More in particular, when the aperture 29 is closed, the front edge of the panel 30 could define part of the front end edge 26.

During use, the air entering through the upper opening 10 flows into the cavity 27 as a result of the forward motion of the car 1, but thanks to opening of the aperture 29, immediately exits towards the outside, without stagnating in said cavity 27, with a flow that is relatively homogeneous, i.e. without forming turbulence of a considerable amount.

As a result of reduction of the turbulence in the cavity 27, a reduction of the noise in the passenger compartment 4 is achieved when the roof 11 is stored and closed in the compartment 16. At the same time, thanks to exit of the air through the aperture 29, the resistance to forward travel of the car 1 decreases, with a consequent saving of fuel/energy.

The movement of the panel 30 is motorised, i.e. it is obtained by means of at least one actuator 34 (schematically shown only in Figure 3, for simplicity), in order to be able to open/close the aperture 29 even when the driver is driving the car 1.

The actuator 34, in particular, is carried by the wall 28, is coupled to the panel 30 (and/or to the hinge 32 and/or to the guide mechanism 33) and is activated in response to a command from the driver to move said panel 30 and therefore to open/close the aperture 29. Preferably, the actuator 34 is activated in a synchronised manner with activation of the mechanisms 15 and 25, in response to a single command from the driver: by way of example, the aperture 29 is opened and/or closed by activating the actuator 34 immediately after having terminated positioning of the cover 18 in the closed position, and/or during movement of the cover 18 towards said closed position.

The advantages provided by the aperture 29, with the corresponding panel 30, are clear from the above. In fact, as stated above in detail, it is possible to reduce the noise in the passenger compartment 4 and to reduce consumption when the upper opening 10 is open and the car 1 is travelling at relatively high speeds.

The driver's visibility through the rear window 20 is not compromised, essentially for the following reasons:
- the panel 30 is at least partially transparent, and preferably entirely transparent, and the wall 28 around the aperture 29 is also transparent;
- the aperture 29 can be designed to have a relatively small breadth, relative to the entire transparent surface of the rear window 20; in this regard, note that the appended drawings might not show the actual dimensions and proportions of the aperture 29 and the panel 30;
- the aperture 29 is close to the front end edge 26 and to the cross member 12, so most of the rear window 20 is not altered by the movement of the panel 30;
- the mechanism that couples the panel 30 to the wall 28 (for example, the hinge 32 and/or the guide mechanism 33) and the sealing gaskets can be made of a transparent material.

In conclusion, it is clear that changes and variants may be made to the car 1 described and illustrated here without thus deviating from the scope of protection of the present invention, as defined in the appended claims.

In particular, as already explained above, the shape, dimensions and position of the aperture 29, and also the mechanism for coupling and moving the panel 30, could be different to what is shown and/or indicated here above by way of example.

## Claims

1. Targa style car (1), comprising:
- a passenger compartment (4) having an upper opening (10) and rearwardly delimited by a rear window (20), which is at least partly transparent;
- a roof (11), which is movable between a first position, in which said upper opening (10) is closed by the roof (11), and a second position, in which the upper aperture (29) is open and the roof (11) is stored in a compartment (16) arranged behind said passenger compartment (4);
- a cover (18), which is movable between a third position, in which said compartment (16) is closed at the top by said cover (18), and a fourth position, in which said compartment (16) is open at the top during roof (11) handling operations;
wherein said rear window (20) defines part of said cover (18);
**characterised in that** said rear window (20) comprises:
- a wall (28) defining an aperture (29);
- a panel (30) movable relative to said wall (28) between a fifth position, in which said aperture (29) is closed by said panel (30), and a sixth position, in which said aperture (29) is open.

2. The targa style car according to claim 1, wherein said wall (28) carries at least one actuator (34) operated to move said panel (30) between the fifth position and the sixth position.

3. The targa style car according to claim 1 or 2, wherein said wall (28) and said panel (30) comprise respective transparent surfaces.

4. The targa style car according to claim 3, wherein said transparent surfaces extend as a prolongation of each other when said panel (30) is arranged in the fifth position.

5. The targa style car according to claim 3 or 4, wherein said panel (30) is completely transparent.

6. The targa style car according to any of the preceding claims, wherein said panel (30) is carried by said wall (28).

7. The targa style car according to claim 6, wherein said panel (30) is rotatably coupled to said wall (28) by at least one hinge (32).

8. The targa style car according to claim 6 or 7, wherein said panel (30) is coupled to said wall (28) in a sliding manner via a guide mechanism (33).

9. The targa style car according to any of the preceding claims, wherein:
- said cover (18) has a front end edge (26) which, in the third position, is fluid-tightly coupled to a cross member (11) defining a rear edge of said upper opening (10); and
- said aperture (29) is formed in a position adjacent to said front end edge (26).

10. The targa style car according to any of the preceding claims, wherein:
- said cover (18) has a front end edge (26) which, in the third position, is fluid-tightly coupled to a cross member (11) defining a rear edge of said upper opening (10); and
- said rear window (20), in the third position, has a profile that slopes downward gradually, going backward from said front end edge (26), so as to delimit, downwardly, a cavity (27) forming part of the passenger compartment (4) or directly communicating with said passenger compartment (4).
